# EUROPÄISCHE PATENTSCHRIFT

(11) **EP 3 350 101 B1**
(45) Veröffentlichungstag und Bekanntmachung des Hinweises auf die Patenterteilung: **30.10.2019**
(21) Anmeldenummer: 16766556.1
(22) Anmeldetag: 16.09.2016
(51) Int. Cl.: B65D 85/804

(54) **ADAPTER FÜR EINE PORTIONSKAPSEL**
ADAPTER FOR A SINGLE SERVE CAPSULE
ADAPTATEUR DE CAPSULE

(30) Priorität: 18.09.2015 DE 102015218023; 02.10.2015 DE 102015219147; 01.12.2015 DE 102015223919
(43) Veröffentlichungstag der Anmeldung: 25.07.2018
(73) Patentinhaber: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE); HANISCH, Marco, 51491 Overath (DE)
(74) Vertreter: Kutzenberger Wolff & Partner
(86) Internationale Anmeldenummer: PCT/EP2016/072016
(87) Internationale Veröffentlichungsnummer: WO 2017/046352

(56) Entgegenhaltungen:
- EP-A2- 1 566 127
- WO-A1-2013/136209
- WO-A1-2013/136209
- WO-A1-2015/075584
- WO-A1-2015/075584
- US-A1- 2015 056 331
- US-A1- 2015 056 331
- US-A1- 2015 201 790
- US-A1- 2015 201 790
- US-B2- 10 111 554

## Beschreibung

Die vorliegende Erfindung betrifft einen Adapter mit einem Innenraum, der eine Portionskapsel aufnimmt, wobei der Innenraum an einem ersten Ende eine Öffnung zum Einführen der Portionskapsel in den Innenraum und an seinem gegenüberliegenden Ende eine Aufnahme für einen Aufstechdorn aufweist.

Portionskapseln, die zur Herstellung von Getränken, insbesondere Kaffee- oder Teegetränken, eingesetzt werden, weisen oftmals eine sehr unterschiedliche Form und/oder Größe auf. Um dennoch unterschiedliche Portionskapseln in unterschiedlichen Maschinen einsetzen zu können, sind dem Fachmann bspw. aus der US 2015/0056331 A1, der WO 2014/163497 A1 oder der WO 2014/128542 A1 Adapter bekannt, die es ermöglichen, unterschiedliche Portionskapseln mit unterschiedlichen Kaffeeautomaten kompatibel zu machen. Als weiterer Stand der Technik ist EP 1566127 A2 zu nennen.

Es war die Aufgabe der vorliegenden Erfindung, einen verbesserten Adapter zur Verfügung zu stellen.

Gelöst wird die Aufgabe mit einem Adapter mit einem Innenraum, der eine Portionskapsel aufnimmt, wobei der Innenraum an einem ersten Ende eine Öffnung zum Einführen der Portionskapsel in den Innenraum und an seinem gegenüberliegenden Ende eine Aufnahme für einen Aufstechdorn aufweist, wobei der Aufstechdorn vorzugsweise reversibel mit der Aufnahme verbindbar ist, wobei der Aufstechdorn mittels Stegen an einer Platte vorgesehen ist, an deren Umfang Form- und/oder Kraftschlussmittel vorgesehen sind, die verbindend mit einem komplementären Form- und/oder Kraftschlussmittel der Aufnahme zusammenwirken.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft einen Adapter, der vorzugsweise aus einem Kunststoffmaterial gespritzt vorgesehen ist. Dieser Adapter weist einen Innenraum auf, der eine Portionskapsel, die ein Material zur Herstellung eines Getränks, bspw. eines Tee- oder Kaffeegetränks, aufweisen kann, aufnimmt. An einem Ende weist der Innenraum eine Öffnung auf, durch die die Portionskapsel in den Innenraum des Adapters eingeführt werden kann. An dem gegenüberliegenden Ende der Öffnung ist eine Aufnahme für einen Aufstechdorn vorgesehen. Dieser Aufstechdorn öffnet die Portionskapsel an einem Ende, insbesondere im Bodenbereich der Portionskapsel. Der Adapter und die Portionskapsel werden jeweils in einen Brühautomaten eingeführt und beispielsweise ein Kaffee- oder Teegetränk hergestellt.

Vorzugsweise ist der Querschnitt des Aufsteckdorns vieleckig, insbesondere acht-eckig vorgesehen und weist besonders bevorzugt an seinem äußeren Umfang mehrere, insbesondere vier Ablaufrinnen auf, durch die das fertiggestellte Getränk in einen Auffangbehälter laufen kann.

Erfindungsgemäß ist nun vorgesehen, dass der Aufstechdorn vorzugsweise reversibel mit der Aufnahme des Adapters verbindbar ist. Die erfindungsgemäße Ausführungsform hat den Vorteil, dass der Aufstechdorn und der Adapter bspw. zu Reinigungszwecken voneinander getrennt werden können. Dadurch ist der erfindungsgemäße Adapter wesentlich hygienischer als Adapter gemäß dem Stand der Technik. Außerdem können der Adapter und der Aufstechdorn aus unterschiedlichen Materialien hergestellt werden.

Ein weiterer bevorzugter oder erfindungsgemäßer Gegenstand der vorliegenden Erfindung betrifft einen Adapter, bei dem zwischen dem ersten und dem gegenüberliegenden Ende des Innenraums eine Wandung vorgesehen ist und diese Wandung einen Versprung aufweist.

Die zu diesem Gegenstand der vorliegenden Erfindung gemachten Ausführungen gelten für die anderen Gegenstände der vorliegenden Erfindung gleichermaßen und umgekehrt.

Vorzugsweise ist der Versprung im Bereich der Wandung, die in der Nähe der Öffnung zum Einführen der Portionskapsel vorgesehen ist, angeordnet.

Der Versprung in der Wandung hat den Vorteil, dass dadurch eine zusätzliche An- und/oder Auflagekante für die Portionskapsel vorhanden ist, an der sich die Wandung der Portionskapsel ab- und/oder aufstützen kann. Dies hat insbesondere den Vorteil, dass sich ein vorzugsweise in der Portionskapsel vorgesehener Flüssigkeitsverteiler über die Wandung der Portionskapsel an dem Adapter abstützen kann.

Vorzugsweise schließen sich an den Versprung eine oder mehrere Ripppen an, die vorzugsweise parallel zu der Längserstreckungsrichtung der Kapselwandung, die sich zwischen dem Kapselboden und dem Kragen erstreckt, vorgesehen sind. Vorzugsweise sind die Rippen äquidistant am Umfang der Kapselwandung angeordnet.

Noch ein weiterer oder erfindungsgemäßer Gegenstand der vorliegenden Erfindung betrifft einen Adapter, der an dem Ende, an dem der Aufstechdorn vorgesehen ist einen Ablauf mit mindestens einem Ablaufkanal aufweist.

Die zu diesem Gegenstand der vorliegenden Erfindung gemachten Ausführungen gelten für die anderen Gegenstände der vorliegenden Erfindung gleichermaßen und umgekehrt.

Dadurch, dass sich der Ablauf im Bereich des unteren Endes des Adapters befindet, in dem auch der Aufstechdorn vorgesehen ist, ist der Ablaufweg des fertiggestellten Getränks sehr kurz, so dass sich lediglich ein geringer Druckverlust einstellt, wenn das fertiggestellte Getränk aus der Kapsel in den Auffangbehälter läuft.

Vorzugsweise ist in mindestens einem Ablaufkanal ein Strömungsbrecher vorgesehen. Dieser Strömungsbrecher vergleichmäßigt die Strömung des ausströmenden Getränks, so dass dieses gezielt in ein Aufnahmegefäß, bspw. eine Tasse, abgeleitet werden kann.

Weiterhin bevorzugt endet jeder Ablaufkanal in und/oder am Umfang einer Ablaufspitze. Die Flüssigkeit strömt aus dem jeweiligen Ablaufkanal an der Ablaufspitze entlang und wird wiederum gezielt in ein Ablaufgefäß geleitet.

Weiterhin bevorzugt ist an der Aufnahme und/oder an dem Aufstechdorn ein Form- und/oder Kraftschlussmittel vorgesehen, die vorzugsweise rastend zusammenwirken. Dadurch wird der Aufstechdorn zum einen fest in der Aufnahme gehalten, zum anderen kann er jedoch vorzugsweise ohne den Einsatz eines Werkzeuges von dem Adapter, bspw. zu Reinigungszwecken, entfernt bzw. an diesem montiert werden.

Gemäß einer bevorzugten Ausführungsform der vorliegenden Erfindung weist der Adapter einen Kragen auf. Mit diesem Kragen liegt er vorzugsweise auf einer entsprechenden Aufnahme in dem Brühautomaten auf bzw. stützt sich an dieser ab.

Weiterhin bevorzugt weist der Adapter in seinem Bodenbereich eine Sicke, insbesondere eine kreisförmige Sicke auf, die sich vorzugsweise um den Ablauf des Adapters herum erstreckt. Der Rand des Ablaufs im Bodenbereich des Adapters ist vorzugsweise etwas erhaben im Verbleich zum dem Bodenbereich, der sich um den Rand herum erstreckt.

Ein weiterer Gegenstand der vorliegenden Erfindung ist ein System bestehend aus dem erfindungsgemäßen Adapter und einer Portionskapsel und vorzugsweise aus einem Kaffeeautomaten.

Die zu diesem Gegenstand der vorliegenden Erfindung gemachten Ausführungen gelten für die anderen Gegenstände der vorliegenden Erfindung gleichermaßen und umgekehrt.

Die Portionskapsel weist einen Kapselkörper mit einer Wandung, die vorzugsweise zylindrisch oder konisch vorgesehen ist, woran sich der Kapselboden anschließt. Auf der dem Boden gegenüberliegenden Seite weist der Kapselkörper eine Öffnung auf, durch die ein Filterelement, das Getränkerohmaterial und gegebenenfalls ein Flüssigkeitsverteiler eingeführt wird. Diese Öffnung wird nach dem Befüllen durch eine Deckelfolie abgedeckt, die vorzugsweise an einem Kragen, der an dem dem Boden gegenüberliegenden Ende der Wandung vorgesehen ist, befestigt, vorzugsweise gesiegelt ist. Im Bereich des Kragens ist in der Wandung vorzugsweise eine Stapelkante in Form eines Vorsprungs vorgesehen. Der Vorsprung weist einen größeren Querschnitt, insbesondere kreisförmigen Querschnitt als die Wandung und/oder der Boden auf.

Gemäß einer bevorzugten Ausführungsform des erfindungsgemäßen Systems weist die Portionskapsel einen Kragen auf, der von einem Ende einer Wandung der Portionskapsel absteht, wobei dieser Kragen an der Anlagefläche des Kragens des Adapters anliegt.

Vorzugsweise weist die Portionskapsel Rippen auf, die besonders bevorzugt parallel zu der Erstreckungsrichtung der Deckelfolie vorgesehen sind. Diese Rippen weisen jeweils vorzugsweise einen größeren Querschnitt, insbesondere Durchmesser als die Kapselwandung auf. Vorzugsweise sind die Rippen durch Tiefziehen hergestellt.

Weiterhin bevorzugt weist die Portionskapsel einen Flüssigkeitsverteiler auf, dessen Umfang an der Innenseite der Wandung des Kapselkörpers anliegt, wobei die Umlaufkante in dem Adapter die Wandung der Portionskapsel im Bereich der Anlagefläche des Flüssigkeitsverteilers abstützt. Besonders bevorzugt stützt sich der Flüssigkeitsverteiler zumindest zeitweise an dem Vorsprung in der Kapselwandung ab. Der Flüssigkeitsverteiler verteilt die einströmende Flüssigkeit über den Querschnitt der Portionskapsel.

Zur Herstellung eines Getränks wird der Boden der Portionskapsel mit einem Aufstechdorn geöffnet. Vorzugsweise ist der Boden der Portionskapsel, insbesondere in seinem Zentralbereich, und vorzugsweise vor dem Öffnen, konvex vorgesehen. Besonders bevorzugt schließt sich an die konvexe Ausbuchtung eine kreisringförmige Sicke an, die besonders bevorzugt wie ein Scharnier funktioniert. Insbesondere entlang der Sicke kann sich der Boden von einer konvexen in eine konkave Form überführt werden, wobei der Boden vorzugsweise in die konvexe Form vorgespannt ist.

Zur Herstellung eines Getränks wird die Portionskapsel in den Adapter eingelegt und der Einstechdorn drückt die Portionskapsel von der konvexen in eine konkave Stellung. Dabei oder danach wird der Boden der Portionskapsel zumindest angestochen, vorzugsweise durchstochen, insbesondere jedoch nur geringfügig durchstochen. Sobald Flüssigkeit in die Portionskapsel eingeführt wird, steigt der Druck in der Kapsel an. Dabei wird die Portionskapsel zumindest wieder in Richtung ihrer konvexen Form rückgeformt, vorzugsweise auch unterstützt durch die Vorspannung des Bodens. Beim Rückformen verschiebt sich der Boden entlang des Aufsteckdorns und die Öffnung im Boden der Portionskapsel vergrößert sich. Besonders bevorzugt legt sich der Boden an den Aufstechdorn an, nicht aber an die Kontur der Rinne(n), die an dem Umfang des Aufstechdorns befinden können.

Weiterhin bevorzugt ist der Brühautomat mit einer Flüssigkeitsdüse versehen, die eine Membran, mit der der Kapselkörper der Portionskapsel verschlossen ist, durchsticht und durch die Flüssigkeit in die Portionskapsel eingeführt, insbesondere eingespritzt wird. Vorzugsweise ist die Düse als Kanüle ausgeführt. Vorzugsweise durchsticht die Flüssigkeitsdüse die Membran der Portionskapsel in deren Randbereich.

Weiterhin bevorzugt dringt die Flüssigkeitsdüse nur soweit in die Portionskapsel ein, dass sie den Flüssigkeitsverteiler allenfalls geringfügig berührt.

Vorzugsweise wird der Adapter reversibel in einer Schublade des Brühautomaten vorgesehen, insbesondere eingelegt, die von einer Beladestellung, in der die Portionskapsel in den Adapter eingelegt werden kann in eine Brühstellung, in der das Getränk, insbesondere das Kaffeegetränk hergestellt wird, überführbar ist. Vorzugsweise wird bei der Überführung von der Belade- in die Brühstellung der Boden der Portionskapsel zumindest angestochen und/oder der Kragen in Richtung des Adapters gedrückt, so dass dieser an dem Adapter anliegt.

Gemäß einer bevorzugten Ausführungsform weise die Wandung des Adapters, die der Portionskapsel zugewandt ist eine Profilierung, beispielsweise Rippen auf.

Vorzugsweise weist die Portionskapsel einen Kapselkörper auf, in dem das Getränkerohmaterial, beispielsweise das Kaffeepulver, gegebenenfalls ein Filter und gegebenenfalls ein Flüssigkeitsverteiler vorgesehen ist. Der Kapselkörper weist eine Wandung und einen Boden auf. Die Wandung ist vorzugsweise konisch vorgesehen und weist an ihrem einen Ende einen Boden auf, der mit der Wandung einstückig vorgesehen ist. Im Übergangsbereich zwischen der Wandung ist ein Krümmungsradius vorgesehen. Vorzugsweise weist die Wandung mehrere Rippen auf, die insbesondere parallel zum Boden verlaufen, die sich um den gesamten Umfang der Wandung erstrecken, die äquidistant zueinander vorgesehen sind. Die Rippen haben einen größeren Durchmesser als die Wandung selbst, wobei eine Rippe, insbesondere die Rippe, die dem Boden am nächsten ist einen größeren Durchmesser aufweist als die anderen Rippen. Weiterhin bevorzugt weist die Wandung in dem Bereich des Endes, das dem Boden gegenüberliegt einen Vorsprung auf, der zum einen als Stapelkante und zum anderen als Auflage für die Umlaufkante in dem Adapter dient. Weiterhin bevorzugt ist an dem Ende der Wandung, das dem Boden gegenüberliegt ein Kragen vorgesehen, der sich parallel zu dem Boden erstreckt und an dem eine Deckelfolie, die den Kapselkörper verschließt, befestigt, insbesondere gesiegelt ist. Der Boden weist vorzugsweise eine kreisringförmige Prägung auf und ganz besonders bevorzugt wölbt sich der Boden innerhalb dieser Prägung nach außen in Richtung des Dorns des Adapters. An dem Boden ist vorzugsweise der Filter befestigt, insbesondere gesiegelt, wobei die Siegelnaht insbesondere kreisringförmig vorgesehen, wobei die Siegelnaht und die kreisringförmige Prägung vorzugsweise denselben Durchmesser haben. Innendurchmesser und Außendurchmesser können sich jedoch jeweils unterscheiden.

Vorzugsweise erstreckt sich die Wölbung in dem Boden der Portionskapsel im Bereich der Ausnehmung der Aufstechplatte. Vorzugsweise weist die Wölbung einen größeren, kleineren oder denselben Durchmesser als/wie die Aufstechplatte des Adapters auf.

Im Folgenden die Erfindungen anhand der Figuren 1 bis 18 erläutert. Diese Erläuterungen sind lediglich beispielhaft und schränken den allgemeinen Erfindungsgedanken nicht ein. Diese Erläuterungen gelten für alle Gegenstände der vorliegenden Erfindung gleichermaßen.
**Figuren 1 bis 5** zeigen den erfindungsgemäßen Adapter.
**Figuren 6 bis 8** zeigen eine bevorzugte Ausführungsform des Aufstechdorns.
**Figuren 9 bis 11** zeigen jeweils eine bevorzugte Ausführungsform des Adapters.
**Figur 12** zeigt schematisch eine Ausführungsform einer Portionskapsel.
**Figuren 13 und 14** zeigen eine Verstärkung in der Wandung des Adapters.
**Figuren 15 - 18** zeigen eine weitere Ausführungsform des Aufstechdorns.

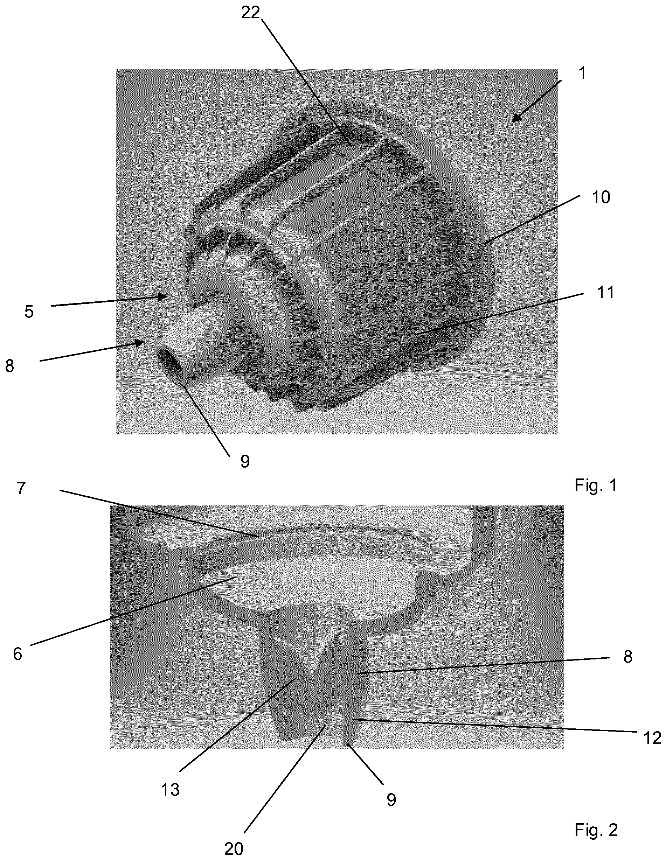

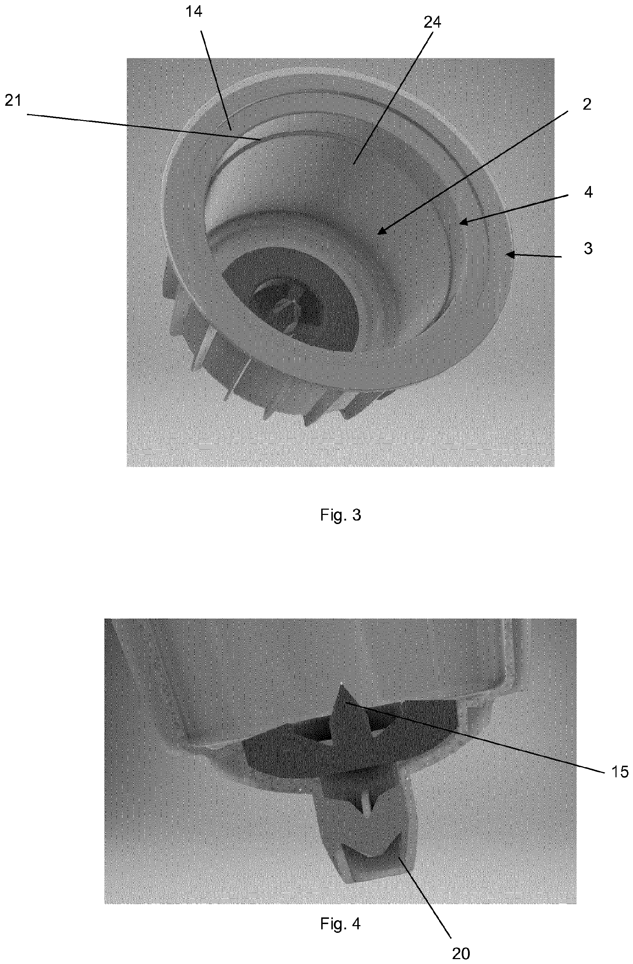

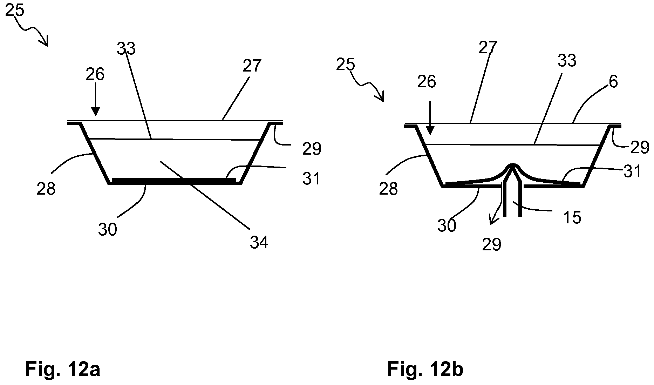

**Die** **Figuren 1 bis 5** zeigen eine erste Ausführungsform des erfindungsgemäßen Adapters 1. Dieser weist einen Innenraum 2 auf, der eine Portionskapsel, wie sie bspw. in Figur 12 dargestellt ist, aufnehmen kann. Der Innenraum weist ein erstes Ende 3 mit einer Öffnung 4 auf, durch die die Portionskapsel in den Innenraum des Adapters eingeführt werden kann. An seinem gegenüberliegenden Ende 5, d.h. im Bodenbereich des Adapters, ist eine Aufnahme 6 für einen Aufstechdorn 15 vorgesehen. Mit dem Aufstechdorn 15 wird ein Ende, insbesondere der Bodenbereich des Kapselkörpers einer Portionskapsel, für die Herstellung eines Getränks aufgestochen. Dafür wird Flüssigkeit, insbesondere heißes Wasser, in die Portionskapsel eingeleitet, indem beispielsweise eine Membran 27 von einer Flüssigkeitsdüse 26 durchstochen wird und löst und/oder extrahiert dort eine für die Herstellung des Getränks, bspw. eines Tee- oder Kaffeegetränks, benötigte Substanz. Das so fertiggestellte Getränk läuft entlang des Umfangs des Aufstechdorns in einen Ablauf 8 ab, der einen Flüssigkeitskanal 20 aufweist, durch den das fertiggestellte Getränk in einen Aufnahmebehälter, bspw. einen Becher, strömt. Vorzugsweise weist der Adapter im Bereich der Öffnung einen Kragen 10 auf, der insbesondere in einem rechten Winkel von der Wandung 24 des Adapters absteht. Dieser Kragen dient vorzugsweise als Anlagefläche für eine entsprechende Aufnahme an dem Brühautomaten. Weiterhin bevorzugt weist der Kragen eine Anlagefläche, insbesondere eine kreisringförmige Einbuchtung, auf. An dieser Anlagefläche liegt ein ggf. an der Portionskapsel vorgesehener Kragen 29 an. Weiterhin bevorzugt weist der erfindungsgemäße Adapter insbesondere im Bereich der Außenfläche der Wandung 24 mindestens ein Versteifungselement 11, bspw. in Form von Stegen oder Rippen, auf. Gemäß einem Gegenstand der vorliegenden Erfindung ist der Aufstechdorn 15 bevorzugt reversibel an dem Bodenbereich 5 des Adapters vorgesehen, so dass er bspw. zu Reinigungszwecken entnommen werden kann. Dafür weisen sowohl die Aufnahme 6 als auch der Adapter kompatible Formschlussmittel 7, 19 auf, mit denen der Adapter insbesondere rastend mit der Aufnahme verbunden werden kann. Gemäß einem weiteren Gegenstand der vorliegenden Erfindung ist im Bereich der Wandung 24 ein Versprung 22 vorgesehen, wodurch sich eine Auflagekante 21 am inneren Umfang der Wandung 24 des Adapters ergibt. An dieser Kante kann sich die Wandung der Portionskapsel und/oder ein möglicherweise in der Portionskapsel vorgesehener Flüssigkeitsverteiler ab- und/oder aufstützen. Gemäß noch einem Gegenstand der vorliegenden Erfindung ist in dem Flüssigkeitskanal 20 ein Strömungsbrecher 13 vorgesehen, der den Flüssigkeitsstrom durch den Ablaufkanal beeinflusst, insbesondere vergleichmäßigt, wodurch sichergestellt wird, dass das fertiggestellte Getränk in das entsprechende Aufnahmegefäß strömt. Der Adapter und der Aufstechdorn sind vorzugsweise jeweils ein Kunststoffspritzteil, die besonders bevorzugt separat voneinander gefertigt und dann zusammengesetzt werden.

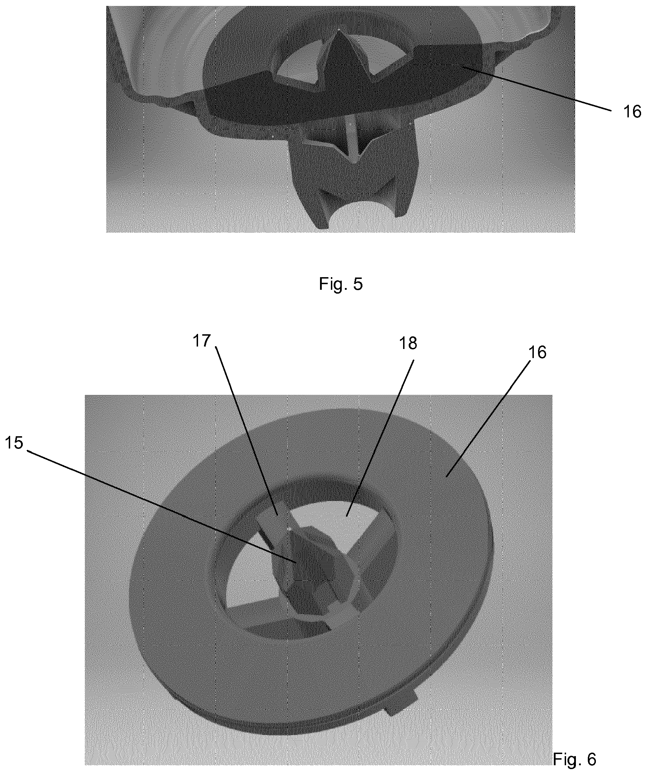

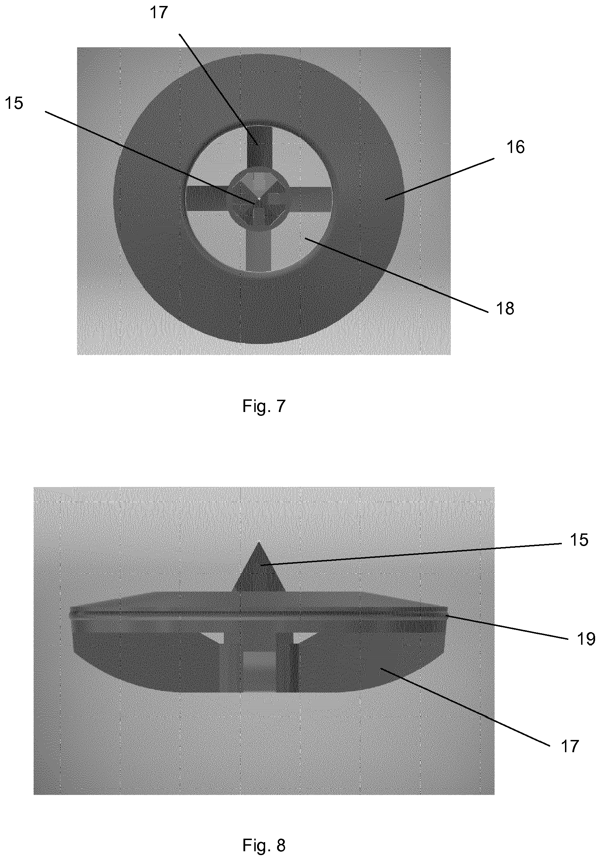

**Die** **Figuren 6 bis 8** zeigen eine bevorzugte Ausführungsform des Aufstechdorns 15. Dieser ist in dem vorliegenden Fall mittels Stegen 17 an einer Platte 16 vorgesehen, an deren Umfang vorzugsweise Form- und/oder Kraftschlussmittel vorgesehen sind, die verbindend, insbesondere rastend, mit einem komplementären Form- und/oder Kraftschlussmittel der Aufnahme in dem Adapter zusammenwirken. Zwischen den Stegen sind Ausnehmungen 18 vorgesehen. Das fertiggestellte Getränk läuft entlang des Aufstechdorns durch die Ausnehmungen 18 in den Kanal 20 des Adapters und von dort in die Aufnahme des Getränks, bspw. in einen Becher.

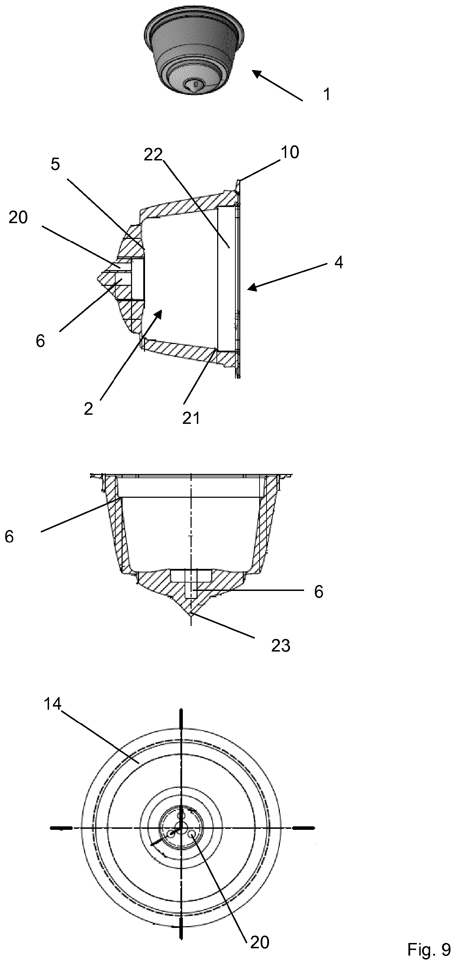

**Figur 9** zeigt eine weitere Ausführungsform des erfindungsgemäßen Adapters. Im Wesentlichen kann auf die Ausführungen zu den voranstehenden Figuren Bezug genommen werden. In dem vorliegenden Fall wird der Adapter in eine Aufnahme 6 eingeführt, und im Bodenbereich 5 des Adapters sind eine Mehrzahl, hier drei, Flüssigkeitskanäle 10 vorgesehen, die jeweils im Randbereich einer Ablaufspitze 21 enden. Die Flüssigkeit läuft durch den jeweiligen Ablaufkanal zu der Ablaufspitze 21 und von dort in einen Aufnahmebehälter. Durch die Ablaufspitze ist sichergestellt, dass die Flüssigkeit zumindest im Wesentlichen als ein Strahl in die Aufnahme läuft.

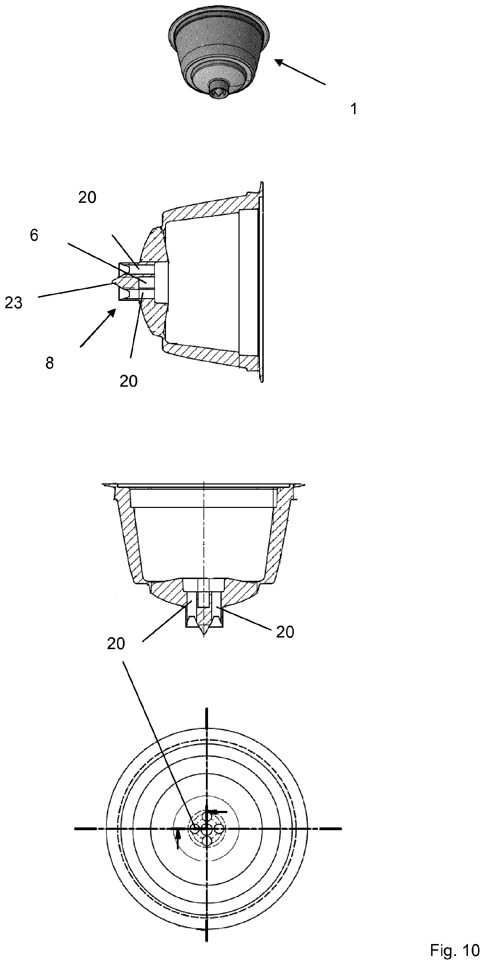

**Figur 10** zeigt eine weitere Ausführungsform des erfindungsgemäßen Adapters, wobei wiederum auf die Ausführungen zu den voranstehenden Figuren Bezug genommen wird. In dem vorliegenden Fall weist der Bodenbereich des Adapters vier Ablaufkanäle 20 auf, die wiederum im Bereich einer Ablaufspitze 23 enden. Die Flüssigkeit läuft jeweils durch die Kanäle 20 und um die Ablaufspitze 23 herum in eine entsprechende Aufnahme.

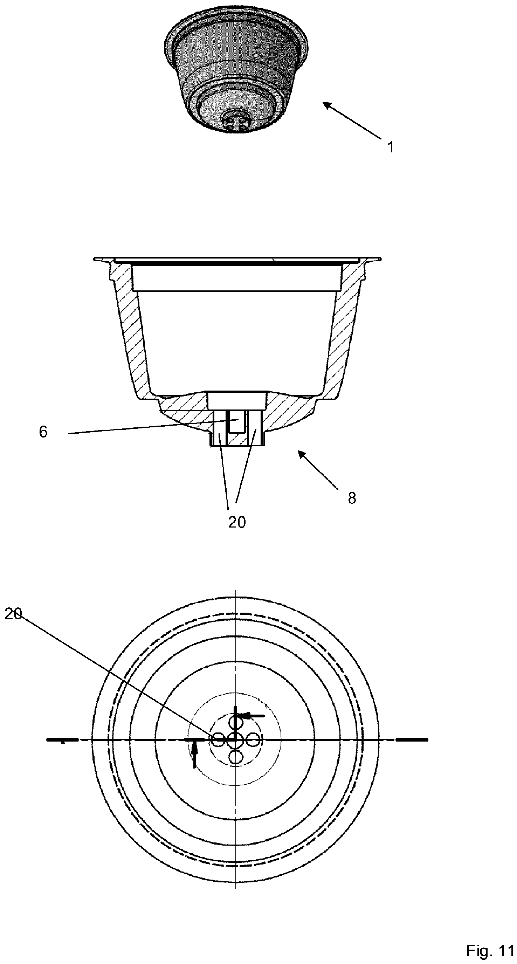

**Figur 11** zeigt eine weitere Ausführungsform des erfindungsgemäßen Adapters, wobei insbesondere auf die Ausführungen gemäß Figur 10 Bezug genommen wird. In dem vorliegenden Fall wurde die Ablaufspitze 23 weggelassen. Die Flüssigkeit läuft aus den Kanälen 20 unmittelbar in die entsprechende Aufnahme, beispielsweise einen Becher.

**Figur 12** zeigt eine Ausführungsform einer Portionskapsel 25, die in den Innenraum des Adapters 1 eingeführt werden kann. Diese Portionskapsel weist einen Kapselkörper 28 mit einem Bodenbereich 30 auf. Die Wandung und der Boden bilden einen Innenraum, der ein Getränkesubstrat, beispielsweise Tee oder Kaffeegranulat, das von durchströmendem Wasser gelöst und/oder extrahiert wird, aufnehmen kann. In dem vorliegenden Fall ist im Bodenbereich ein Filterelement 31 vorgesehen, das vorzugsweise in Form eines Vlies oder eines Filzes vorgesehen ist und insbesondere mit dem Kapselboden bspw. durch Schweißen, insbesondere durch Ultraschallschweißen, verbunden ist. Der Kapselkörper wird durch eine Membran 27, die bspw. mit einem Flansch 29 des Kapselkörpers verbunden wird, verschlossen. Zwischen der Membran und dem Getränkesubstrat ist vorzugsweise ein Flüssigkeitsverteiler 33 vorgesehen, der die einströmende Flüssigkeit über den Querschnitt der Portionskapsel verteilt.

**In** **Figur 12 a** ist die Portionskapsel im ungeöffneten Zustand dargestellt.

**Figur 12 b** zeigt die Portionskapsel im geöffneten Zustand, d.h. während der Herstellung des jeweiligen Getränks. Damit die Portionskapsel mit einer Flüssigkeit, insbesondere heißem Wasser, durchströmt werden kann, wird die Membran wie durch den Pfeil symbolisiert von einer Düse 26 angestochen, die in den Innenraum der Portionskapsel hineinragt und in diese Flüssigkeit eindüst. Bspw. kann die Düse 26 als Kanüle ausgebildet sein. Damit das fertiggestellte Getränk aus der Portionskapsel ausströmen kann, wird diese im Bereich des Bodens 30 mittels eines oben beschriebenen Aufstechdorns 15 angestochen. Dabei kann das Filterelement 31 wie dargestellt von dem Anstechdorn angehoben werden. Der Fachmann erkennt, dass dies aber nicht notwendigerweise der Fall sein muss. Das fertiggestellte Getränk strömt wie durch den Pfeil 29 dargestellt durch einen Zwischenraum zwischen dem Kapselboden und dem Aufstechdorn hindurch in den Ablaufkanal 20. Gemäß einer bevorzugten Ausführungsform weist die Portionskapsel einen Flüssigkeitsverteiler 33 auf, der sich an der Wandung der Portionskapsel abstützt und der ggf. verschieblich entlang der Kapselwandung vorgesehen sein kann. Dieser Flüssigkeitsverteiler wird vorzugsweise durch die an der Adapterwandung 24 vorgesehene Kante 21 abgestützt.

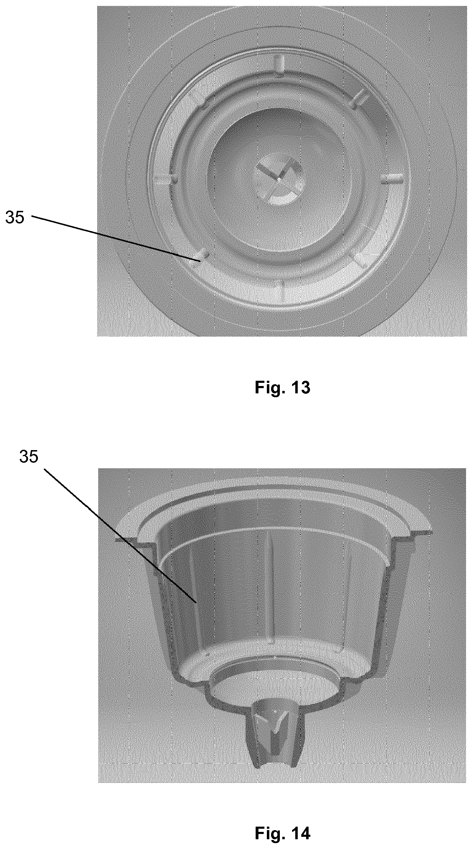

Die **Figuren 13 und 14** zeigen eine bevorzugte Ausführungsform des Adapters, bei der an der Innenseite des Adapters Verstärkungen 35 vorgesehen sind, die zum einen die Stabilität des Adapters erhöhen, aber ggf. auch eine zusätzliche Führung und/oder Stützung für die Portionskapsel darstellen.

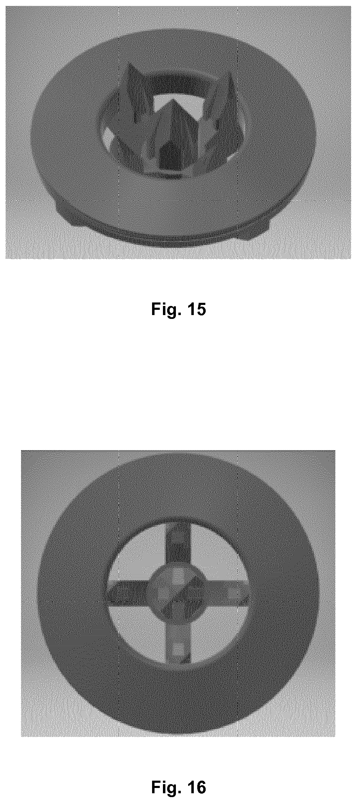

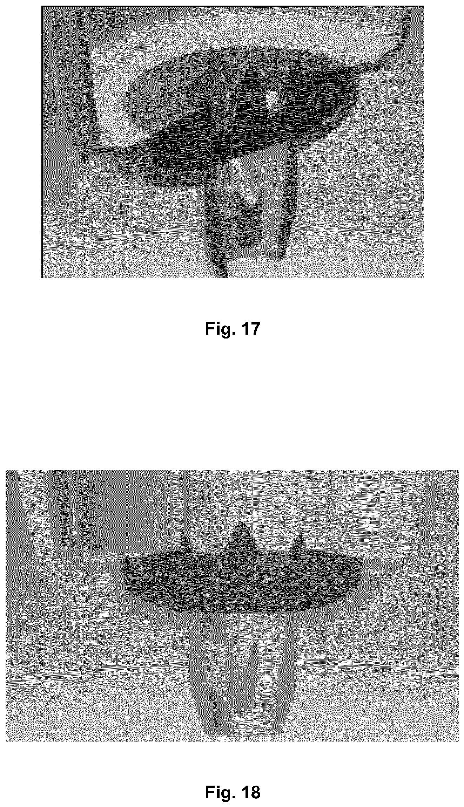

Die **Figuren 15** - **18** zeigen eine weitere Ausführungsform des Aufstechdorns. Im Wesentlichen wir Bezug genommen auf die Ausführungen gemäß den Figuren 5- 8, wobei der Aufstechdorn in dem vorliegenden Fall neben der Spitze im Zentrum weitere, hier vier, zusätzliche Spitzen aufweist, die in den Boden der Kapsel eindringen können. Dadurch wird die Kapsel an mehreren Stellen am Boden aufgestochen und das fertiggestellte Getränk kann an mehreren Stellen abfließen. In dem vorliegenden Fall sind die zusätzlichen Spitzen auf einem Kreise, dessen Mitte im Zentrum des mittleren Aufstechdorns liegt, angeordnet. Die zusätzlichen Spitzen sind vorzugsweise äquidistant angeordnet. Der Fachmann versteht, dass die Anzahl der zusätzlichen Spitzen auch geringer sein kann. Gegebenenfalls kann auch auf die zentrale Spitze verzichtet werden.

### Referenzzeichen:

- 1: Adapter
- 2: Innenraum
- 3: Erstes Ende
- 4: Öffnung
- 5: Zweites Ende, gegenüberliegendes Ende, Bodenbereich
- 6: Aufnahme für einen Aufstechdorn
- 7: Form- und/oder Kraftschlussmittel, Rastkante
- 8: Ablauf
- 9: Ablaufkante
- 10: Kragen, Auflagefläche auf dem Kaffeeautomat
- 11: Versteifungselement, Rippe
- 12: Verjüngung
- 13: Strömungsbrecher
- 14: Auflagefläche für den Kragen der Portionskapsel
- 15: Aufstechdorn
- 16: Aufstechplatte
- 17: Steg
- 18: Ausnehmung
- 19: Form- und/oder Kraftschlussmittel
- 20: Flüssigkeitskanal
- 21: Umlaufkante
- 22: Versprung, Ausbuchtung
- 23: Ablaufspitze
- 24: Wandung
- 25: Portionskapsel
- 26: Injektionsdüse
- 27: Deckelfolie
- 28: Kapselkörper
- 29: Kragen, Flansch
- 30: Kapselboden
- 31: Filterelement
- 32: Ablauf der Flüssigkeit aus der Portionskapsel
- 33: Flüssigkeitsverteiler
- 34: Getränkesubstanz, Tee, Kaffee, etc.
- 35: Verstärkung

## Patentansprüche

1. Adapter (1) mit einem Innenraum (2), der eine Portionskapsel aufnimmt, wobei der Innenraum an einem ersten Ende (3) eine Öffnung (4) zum Einführen der Portionskapsel in den Innenraum und an seinem gegenüberliegenden Ende (5) eine Aufnahme (6) für einen Aufstechdorn (15) aufweist, **dadurch gekennzeichnet, dass** der Aufstechdorn (15), vorzugsweise reversibel, mit der Aufnahme (6) verbunden ist und wobei der Aufstechdorn an Stegen (17) an einer Platte vorgesehen ist, an deren Umfang Form- und/oder Kraftschlussmittel vorgesehen sind, die verbindend mit komplementären Form- und/oder Kraftschlussmitteln der Aufnahme zusammenwirken.

2. Adapter (1) nach Anspruch 1, **dadurch gekennzeichnet, dass** zwischen dem ersten und dem gegenüberliegenden Ende (3, 5) eine Wandung (24) vorgesehen ist und die Wandung einen Versprung (22) aufweist.

3. Adapter (1) nach einem der voranstehenden Ansprüchen, **dadurch gekennzeichnet, dass** er an dem Ende (5) einen Ablauf (8) mit mindestens einem Ablaufkanal (20) aufweist.

4. Adapter (1) nach Anspruch 3, **dadurch gekennzeichnet, dass** in mindestens einem Ablaufkanal ein Strömungsbrecher (13) vorgesehen ist.

5. Adapter (1) nach einem der Ansprüche 3 oder 4, **dadurch gekennzeichnet, dass** mindestens ein, vorzugsweise jeder Ablaufkanal (20) in und/oder am Umfang einer Ablaufspitze (23) endet.

6. Adapter nach einem der voranstehenden Ansprüche, **dadurch gekennzeichnet, dass** an der Aufnahme (6) und/oder an dem Aufstechdorn ein Form- und/oder Kraftschlussmittel (7, 19) vorgesehen ist, die vorzugsweise rastend zusammenwirken.

7. Adapter nach einem der voranstehenden Ansprüche, **dadurch gekennzeichnet, dass** an dem ersten Ende ein Kragen (10) vorgesehen ist.

8. System bestehend aus dem Adapter (1) gemäß einem der voranstehenden Ansprüche und einer Portionskapsel (25) und vorzugsweise aus einem Kaffeeautomaten.

9. System nach Anspruch 8, **dadurch gekennzeichnet, dass** die Portionskapsel (25) einen Kragen (29) aufweist, der von einem Ende einer Wandung der Portionskapsel absteht und dass dieser Kragen (29) an einer Anlagefläche (14) des Kragens (10) des Adapters (1) anliegt.

10. System nach einem der voranstehenden Ansprüche, **dadurch gekennzeichnet, dass** die Portionskapsel einen Flüssigkeitsverteiler (33) aufweist, der an der Wandung des Kapselkörpers anliegt, wobei eine Umlaufkante (22) in dem Adapter die Wandung im Bereich der Anlagefläche des Flüssigkeitsverteilers abstützt.

11. System nach einem der voranstehenden Ansprüche, **dadurch gekennzeichnet**, der Kaffeeautomat eine Flüssigkeitsdüse (26) aufweist, die eine Membran (27) mit der der Kapselkörper (28) der Portionskapsel verschlossen ist, durchsticht und Flüssigkeit in die Portionskapsel einführt.

12. System nach Anspruch 11, **dadurch gekennzeichnet, dass** die Flüssigkeitsdüse im Randbereich der Membran (27) vorgesehen ist.

13. System nach Anspruch 11 oder 12, **dadurch gekennzeichnet, dass** die Flüssigkeitsdüse den Wasserverteiler bevorzugt nicht berührt.

## Claims

1. Adapter (1) having an interior space (2) which receives a single serve capsule, the interior space having, at a first end (3), an opening (4) for introducing the single serve capsule into the interior space and, at its opposite end (5), a receptacle (6) for a piercing spike (15), **characterized in that** the piercing spike (15) is connected, preferably reversibly, to the receptacle (6), and the piercing spike being provided on webs (17) on a plate, on the circumference of which positively locking and/or non-positively locking means are provided which interact with complementary positively locking and/or non-positively locking means of the receptacle in a connecting manner.

2. Adapter (1) according to Claim 1, **characterized in that** a wall (24) is provided between the first and the opposite end (3, 5), and the wall has a step (22).

3. Adapter (1) according to either of the preceding claims, **characterized in that**, at the end (5), it has an outlet (8) with at least one outlet duct (20).

4. Adapter (1) according to Claim 3, **characterized in that** a flow breaker (13) is provided in at least one outlet duct.

5. Adapter (1) according to either of Claims 3 and 4, **characterized in that** at least one, preferably every, outlet duct (20) ends in and/or on the circumference of an outlet point (23).

6. Adapter according to one of the preceding claims, **characterized in that** a positively locking and/or non-positively locking means (7, 19) is provided on the receptacle (6) and/or on the piercing spike, which positively locking and/or non-positively locking means (7, 19) preferably interact in a latching manner.

7. Adapter according to one of the preceding claims, **characterized in that** a collar (10) is provided at the first end.

8. System consisting of the adapter (1) according to one of the preceding claims and a single serve capsule (25) and preferably of a coffee machine.

9. System according to Claim 8, **characterized in that** the single serve capsule (25) has a collar (29) which projects from one end of a wall of the single serve capsule, and **in that** said collar (29) bears against a bearing face (14) of the collar (10) of the adapter (1) .

10. System according to one of the preceding claims, **characterized in that** the single serve capsule has a liquid distributor (33) which bears against the wall of the capsule body, a circumferential edge (22) in the adapter supporting the wall in the region of the bearing face of the liquid distributor.

11. System according to one of the preceding claims, **characterized in that** the coffee machine has a liquid nozzle (26) which punctures a membrane (27), by way of which the capsule body (28) of the single serve capsule is closed, and introduces liquid into the single serve capsule.

12. System according to Claim 11, **characterized in that** the liquid nozzle is provided in the edge region of the membrane (27).

13. System according to Claim 11 or 12, **characterized in that** the liquid nozzle preferably does not make contact with the water distributor.

## Revendications

1. Adaptateur (1) comprenant un espace interne (2) qui reçoit une capsule, l'espace interne présentant, au niveau d'une première extrémité (3), une ouverture (4) pour l'introduction de la capsule dans l'espace interne et, au niveau de son extrémité opposée (5), un logement (6) pour une pointe de perçage (15), **caractérisé en ce que** la pointe de perçage (15) est connectée au logement (6) de préférence de manière réversible, et la pointe de perçage étant prévue au niveau de nervures (17) sur une plaque sur la périphérie de laquelle sont prévus des moyens d'engagement par correspondance de formes et/ou par force qui coopèrent en se connectant à des moyens complémentaires d'engagement par correspondance de formes et/ou par force du logement.

2. Adaptateur (1) selon la revendication 1, **caractérisé en ce qu'**entre la première extrémité et l'extrémité opposée (3, 5) est prévue une paroi (24) et la paroi présente une saillie (22).

3. Adaptateur (1) selon l'une quelconque des revendications précédentes, **caractérisé en ce qu'**il présente, au niveau de l'extrémité (5), une sortie d'écoulement (8) avec au moins un canal d'écoulement (20).

4. Adaptateur (1) selon la revendication 3, **caractérisé en ce qu'**un brise-flux (13) est prévu dans au moins un canal d'écoulement.

5. Adaptateur (1) selon l'une quelconque des revendications 3 ou 4, **caractérisé en ce qu'**au moins un, de préférence chaque, canal d'écoulement (20) se termine dans et/ou sur la périphérie d'une pointe d'écoulement (23).

6. Adaptateur selon l'une quelconque des revendications précédentes, **caractérisé en ce qu'**un moyen d'engagement par correspondance de formes et/ou un moyen d'engagement par force (7, 19) est/sont prévu(s) au niveau du logement (6) et/ou au niveau de la pointe de perçage, lesquels coopèrent de préférence par encliquetage.

7. Adaptateur selon l'une quelconque des revendications précédentes, **caractérisé en ce qu'**un col (10) est prévu au niveau de la première extrémité.

8. Système constitué de l'adaptateur (1) selon l'une quelconque des revendications précédentes et d'une capsule (25) et de préférence d'une machine à café.

9. Système selon la revendication 8, **caractérisé en ce que** la capsule (25) présente un col (29) qui fait saillie depuis une extrémité d'une paroi de la capsule et **en ce que** ce col (29) s'applique contre une surface d'appui (14) du col (10) de l'adaptateur (1).

10. Système selon l'une quelconque des revendications précédentes, **caractérisé en ce que** la capsule présente un distributeur de liquide (33) qui s'applique contre la paroi du corps de capsule, une arête périphérique (22) dans l'adaptateur supportant la paroi dans la région de la surface d'appui du distributeur de liquide.

11. Système selon l'une quelconque des revendications précédentes, **caractérisé en ce que** la machine à café présente une buse pour liquide (26) qui perce une membrane (27) avec laquelle le corps de capsule (28) de la capsule est fermé, et qui introduit du liquide dans la capsule.

12. Système selon la revendication 11, **caractérisé en ce que** la buse pour liquide est prévue dans la région du bord de la membrane (27).

13. Système selon la revendication 11 ou 12, **caractérisé en ce que** de préférence la buse pour liquide ne vient pas en contact avec le distributeur d'eau.
